# EUROPEAN PATENT APPLICATION

(11) **EP 4 746 230 A1**
(43) Date of publication of application: **20.05.2026**
(21) Application number: 24860118.9
(22) Date of filing: 26.06.2024
(51) Int. Cl.: H02J 3/32, H02J 7/00, G06Q 50/06

(54) **CONTROL SYSTEM AND CONTROL METHOD**

(30) Priority: 30.08.2023 KR 20230114944
(71) Applicant: LG Energy Solution, Ltd., Seoul 07335 (KR)
(72) Inventor: YOON, Sun Woo, Daejeon 34122 (KR); JO, Yong Min, Daejeon 34122 (KR); KIM, Tae Youn, Daejeon 34122 (KR)
(74) Representative: BCKIP Part mbB
(86) International application number: PCT/KR2024/008836
(87) International publication number: WO 2025/048194

(57) **Abstract**

A control system according to some embodiments disclosed herein includes a plurality of battery racks, each comprising a plurality of battery packs and an intermediate management device configured to obtain battery data related to the plurality of battery packs and a higher level control device configured to process calculation related to a management function for the plurality of battery racks, based on the battery data, generate a control command for controlling the management function to be applied to the plurality of battery racks, based on a result of processing calculation, and provide the control command to the intermediate management device.

## Description

### TECHNICAL FIELD

### CROSS-REFERENCE TO RELATED APPLICATION

This application claims priority to and the benefit of Korean Patent Application No. 10-2023-0114944 filed in the Korean Intellectual Property Office on August 30, 2023, the entire content of which is incorporated herein by reference.

### TECHNICAL FIELD

Embodiments disclosed herein relate to a control system and a control method.

### BACKGROUND ART

Recently, research and development of secondary batteries have been actively performed. Herein, the secondary batteries, which are chargeable/dischargeable batteries, may be interpreted as including all of conventional nickel (Ni)/cadmium (Cd) batteries, Ni/metal hydride (MH) batteries, etc., and recent lithium-ion batteries. Among secondary batteries, lithium-ion batteries may have a higher energy density than conventional Ni/Cd batteries, Ni/MH batteries, etc., and may be manufactured to be small and lightweight, allowing them to have high usability in terms of power sources for mobile devices. Recently, the lithium ion battery is attracting attention as a next-generation energy storage medium as a usage range thereof is expanded to a power source of electric vehicles.

The secondary battery may be used in an electric grid in the form of an energy storage system (ESS). Excessive power from the electric grid may be stored in an ESS battery pack which may supply power to the electric grid in case of insufficient power in other areas. Meanwhile, to maintain and manage a plurality of battery packs and/or battery racks of the electric grid ESS, it may be necessary to continuously update firmware or software of a management device. Thus, when a plurality of management devices are included to manage the ESS, an excessively large amount of cost may be incurred for this end.

### DISCLOSURE

### TECHNICAL PROBLEM

Embodiments disclosed herein aim to provide a control system and a control method in which a cost for maintaining and managing a electric grid ESS may be reduced and an ESS battery may be directly and immediately controlled.

Technical problems of the embodiments disclosed herein are not limited to the above-described technical problems, and other unmentioned technical problems would be clearly understood by one of ordinary skill in the art from the following description.

### TECHNICAL SOLUTION

A control system according to some embodiments disclosed herein includes a plurality of battery racks, each including a plurality of battery packs and an intermediate management device configured to obtain battery data related to the plurality of battery packs and a higher level control device configured to process calculation related to a management function for the plurality of battery racks, based on the battery data, generate a control command for controlling the management function to be applied to the plurality of battery racks, based on a result of processing calculation, and provide the control command to the intermediate management device.

According to some embodiments, the intermediate management device may include a gateway module for interfacing with the higher level control device and a plurality of function modules for executing the management function according to the control command.

According to some embodiments, each of the plurality of battery packs may include a plurality of battery modules and a lower level management device, and the lower level management device may be configured to perform the management function on the plurality of battery modules according to the control command transmitted from the intermediate management device.

According to some embodiments, the control system may further include a plurality of contactors configured to respectively contact the plurality of battery racks for energy exchange with an electrical grid.

According to some embodiments, the higher level control device may be further configured to perform a state diagnosis function on the plurality of battery racks based on the battery data and generate a contactor separation command for separating at least some of the plurality of contactors from the plurality of battery racks based on a result of performing the state diagnosis function.

According to some embodiments, each of the plurality of battery racks may further include a circuit breaker, and the higher level control device may be further configured to generate an open command for opening a circuit breaker of a battery rack corresponding to the at least some contactor separated from the plurality of battery racks, together with the contactor separation command.

According to some embodiments, the higher level control device may be further configured to update battery management software that provides the function management in a firmware over the air (FOTA) manner through a remote management server.

A control method according to some embodiments disclosed herein includes obtaining battery data related to a plurality of battery packs of each of a plurality of battery racks, through an intermediate management device of each battery rack, processing calculation related to a management function for the plurality of battery racks based on the battery data, through a higher level control device, generating a control command for controlling the management function to be applied to the plurality of battery racks based on a result of processing calculation, through the higher level control device, and providing the control command to the intermediate management device, through the higher level control device.

According to some embodiments, the intermediate management device may include a gateway module for interfacing with the higher level control device and a plurality of function modules for executing the management function according to the control command.

According to some embodiments, the control method may further include performing the management function on a plurality of battery modules of each battery pack according to the control command transmitted from the intermediate management device, through a lower level management device of each battery pack.

According to some embodiments, the control method may further include respectively contacting the plurality of battery racks for energy exchange with an electrical grid, through a plurality of contactors.

According to some embodiments, the control method may further include performing a state diagnosis function on the plurality of battery racks based on the battery data, through the higher level control device and generating a contactor separation command for separating at least some of the plurality of contactors from the plurality of battery racks based on a result of performing the state diagnosis function, through the higher level control device.

According to some embodiments, each of the plurality of battery racks may further include a circuit breaker, and the generating of the contactor separation command may include generating an open command for opening a circuit breaker of a battery rack corresponding to the at least some contactor separated from the plurality of battery racks, together with the contactor separation command.

According to some embodiments, the control method may further include updating, through the higher level control device, battery management software that provides the function management in a firmware over the air (FOTA) manner through a remote management server.

### ADVANTAGEOUS EFFECTS

According to embodiments disclosed herein, there may be provided a control system and a control method in which a cost for maintaining and managing a electric grid ESS may be reduced and an ESS battery may be directly and immediately controlled.

The technical effects according to embodiments disclosed in the present document are not limited to the effects mentioned above, and other effects not mentioned will be clearly understood by those of ordinary skill in the art according to the disclosure of the present document.

### DESCRIPTION OF DRAWINGS

FIG. 1 illustrates components of an electric grid system according to some embodiments.
FIG. 2 illustrates components of a control system according to some embodiments.
FIG. 3 illustrates components of a battery rack according to some embodiments.
FIG. 4 illustrates a structure further including a plurality of contactors in a control system according to some embodiments.
FIG. 5 illustrates a conventional intermediate management device including a self-calculation processing function.
FIG. 6 illustrates an intermediate management device not including a calculation processing function, according to some embodiments.
FIG. 7 illustrates a gateway block of an intermediate management device according to some embodiments.
FIG. 8 illustrates operations of a control method according to some embodiments.

### MODE FOR INVENTION

Hereinafter, embodiments disclosed herein will be described with reference to the accompanying drawings. However, the description is not intended to limit the disclosure of the present document to particular embodiments, and it should be construed as including various modifications, equivalents, and/or alternatives according to the embodiments described herein.

It should be appreciated that embodiments of the present document and the terms used therein are not intended to limit the technological features set forth herein to a particular embodiment and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "1^{st}", "2^{nd}," "first", "second" "A", "B", "(a)", or "(b)" may be used to simply distinguish a corresponding component from another, and does not limit the components in other aspect (e.g., importance or order), unless mentioned otherwise.

Herein, it is to be understood that when an element (e.g., a first element) is referred to, with or without the term "operatively" or "communicatively", as "connected with", "coupled with", or "linked with", or "coupled to" or "connected to" to another element (e.g., a second element), it means that the element may be connected with the other element directly (e.g., wiredly or wirelessly), or indirectly (e.g., via a third element).

A method according to various embodiments disclosed herein may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store, or between two user devices directly. If distributed online, at least part of the computer program product may be temporarily generated or at least temporarily stored in the machine-readable storage medium, such as memory of the manufacturer's server, a server of the application store, or a relay server.

According to embodiments disclosed herein, each component (e.g., a module or a program) of the above-described components may include a single entity or multiple entities, and some of the multiple entities may be separately disposed in different components. According to various embodiments disclosed herein, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to embodiments disclosed herein, operations performed by the module, the program, or another component may be carried out sequentially, in parallel, repeatedly, or heuristically, or one or more of the operations may be executed in a different order or omitted, or one or more other operations may be added.

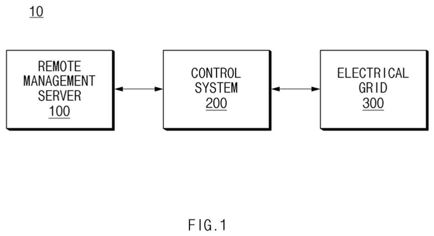

FIG. 1 illustrates components of an electric grid system according to some embodiments.

Referring to FIG. 1, an electric grid system 10 may include a remote management server 100, a control system 200, and an electric grid 300. However, without being limited thereto, some components may be omitted from the electric grid system 10 or other general-purpose components may be further included in the electric grid system 10.

In the electric grid system 10, power of an energy storage system (ESS) may be transmitted to the electric grid 300 or power may be transmitted from the electric grid 300 to the ESS. Energy exchange between the ESS and the electric grid 300 may be controlled by the control system 200.

The electric grid 300 may include a power generation facility, a transmission facility, a substation facility, a distribution facility, etc., and may be implemented in the form of a smart grid that makes power distribution more intelligent and advanced. The power grid 300 may obtain power from the ESS, and supply power to the ESS. According to an embodiment, the ESS may include a plurality of battery racks.

The control system 200 may control overall operations of the ESS. The control system 200 may control charging or discharging of the ESS and manage energy exchange with the power grid 300. The control system 200 may include a control device that performs an energy management function on the ESS. The control device of the control system 200 may perform the energy management function by executing firmware and/or software.

The control system 200 may manage the ESS through a minimum control device. According to an embodiment, the control system 200 may include one highest-level control device and a plurality of secondary management devices, instead of including a plurality of independent devices. In this case, a control structure of the control system 200 may be simplified, thus reducing a cost for maintaining and repairing the same.

The remote management server 100 may remotely manage the energy management function performed by the control system 200. According to an embodiment, the energy management function may be provided through execution of energy management software/firmware, and the remote management server 100 may manage update of the energy management software/firmware. According to an embodiment, the remote management server 100 may update management software/firmware of the control system 200 in a firmware over the air (FOTA) manner.

The FOTA manner may conveniently provide an update function when a plurality of control devices are included in the control system 200, but the plurality of control devices require high-cost MCUs and peripheral devices to satisfy security and stability requirements while supporting FOTA, such that it may be inefficient for the control system 200 to include a plurality of independent control devices in terms of cost. On the other hand, when the control system 200 includes one highest-level control device and a plurality of auxiliary management devices, cost efficiency may be improved and sub-battery elements of the ESS may be directly and immediately controlled by one highest-level control device.

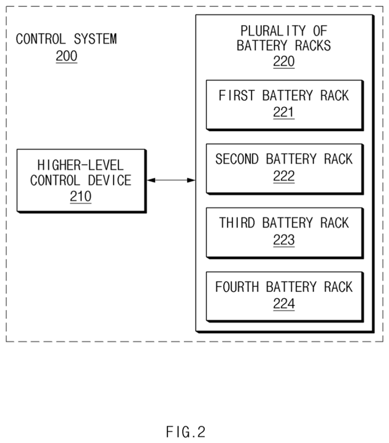

FIG. 2 illustrates components of a control system according to some embodiments.

Referring to FIG. 2, the control system 200 may include a higher level control device 210 and a plurality of battery racks 220. However, without being limited thereto, some components may be omitted from the control system 200 or other general-purpose components may be further included in the control system 200.

According to an embodiment, the higher level control device 210 and the plurality of battery racks 220 of the control system 200 may be electrically connected to one another in a device-to-device communication manner. The device-to-device communication manner may include a general-purpose input and output (GPIO), a serial peripheral interface (SPI), a mobile industry processor interface (MIPI), etc.

The higher level control device 210 may have a structure for executing instructions that implement the operations of the control system 200. The higher level control device 210 may be implemented with an array of multiple logic gates or a general-purpose microprocessor for processing various calculation, and may include a single processor or a plurality of processors. For example, the higher level control device 210 may be implemented in the form of at least one of a microprocessor, a CPU, a GPU, and an AP.

The higher level control device 210 may operate with a memory configured to store various data, instructions, software, mobile applications, computer programs, etc. The memory may be configured separately from or integrally with the higher level control device 210. The higher level control device 210 may execute instructions stored in the memory to process various calculation. For example, the memory may be implemented in the form of a non-volatile memory device such as ROM, PROM, EPROM, EEPROM, flash memory, PRAM, MRAM, RRAM, FRAM, etc., or a volatile memory device such as DRAM, SRAM, SDRAM, RRAM, HDD, SSD, SD, Micro- SD, etc., or may be implemented in the form of a combination thereof.

The plurality of battery racks 220 may implement the ESS. According to an embodiment, each of the plurality of battery racks 220 may include a plurality of battery modules and an intermediate management device. A connection relationship between the plurality of battery racks 220 may be a combination of one or more serial connections and one or more parallel connections. According to an embodiment, the plurality of battery racks 220 may be connected in series. The plurality of battery racks 220 may be connected to the electrical grid 300 through a plurality of contactors.

Each of the plurality of battery racks 220 may include a plurality of battery packs and an intermediate management device configured to obtain battery data related to the plurality of battery packs. The plurality of battery packs of each battery rack may be managed by the intermediate management device that may operate according to a control command of the higher level control device 210. The intermediate management device may include a sensor for obtaining battery data from the plurality of battery packs. According to an embodiment, the battery data may include voltage data, current data, temperature data, etc., and the sensor of the intermediate management device may include a voltage sensor, a current sensor, a temperature sensor, etc.

The higher level control device 210 may be configured to process calculation related to a management function for the plurality of battery racks based on the battery data. When the battery data obtained from the intermediate management devices is provided to the higher level control device 210, the higher level control device 210 may process the calculation related to the management function based on the battery data. According to an embodiment, the higher level control device 210 may process the calculation for estimating a state of charge (SOC) and/or a state of health (SOH) of a plurality of battery packs and/or the plurality of battery racks 220, based on voltage data.

The higher level control device 210 may be configured to generate a control command for controlling the management function to be applied to the plurality of battery racks 220 based on a result of processing the calculation. For example, when the management function is limiting an output voltage of the plurality of battery packs and/or the plurality of battery racks 220 based on the SOC and/or the SOH, the higher level control device 210 may generate a control command for setting an upper limit of the output voltage.

The higher level control device 210 may be configured to provide the control command to the intermediate management device. For example, the higher level control device 210 may provide the control command for setting the upper limit of the output voltage to the intermediate management device which may then limit a voltage output by the plurality of battery packs to below the upper limit in response to the control command.

In this way, the intermediate management device may perform various management functions on the plurality of battery packs based on the control command provided from the higher level control device 210 without including a processing function. Thus, a plurality of intermediate management devices may have a relatively simple structure, do not require periodic software update, and directly and immediately control the plurality of battery packs due to simplification of the control structure.

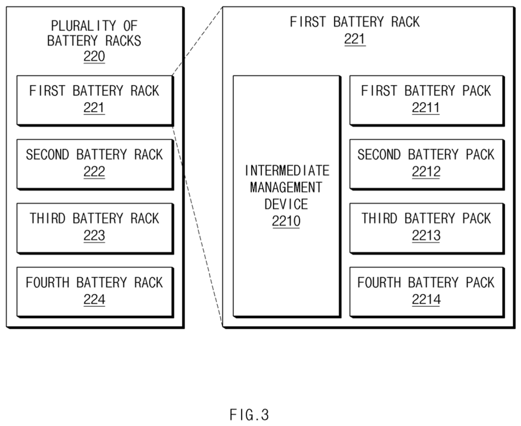

FIG. 3 illustrates components of a battery rack according to some embodiments.

Referring to FIG. 3, the plurality of battery racks 220 may include a first battery rack 221 to a fourth battery rack 224. Herein, the number of four battery racks is merely an example, and the plurality of battery racks 220 may include five or more battery racks.

Each of the plurality of battery racks 220 may include a plurality of battery packs and an intermediate management device. For example, the first battery rack 221 may include an intermediate management device 2210 and a first battery pack 2211 to a fourth battery pack 2244. Likewise, the first battery rack 221 may include five or more battery packs. A connection relationship between the plurality of battery packs may be a combination of one or more serial connections and one or more parallel connections.

According to an embodiment, each of the plurality of battery packs may include a plurality of battery modules and a lower level management device, and the lower level management device may be configured to perform a management function on the plurality of battery modules according to the control command transmitted from the intermediate management device. Such a control command transmission structure between a pack and a module may make a control command transmission structure between a rack and a pack more specific. According to specification of the control command transmission structure, a battery module unit as well as a battery pack unit may be integrally managed through a control command of the higher level control device 210.

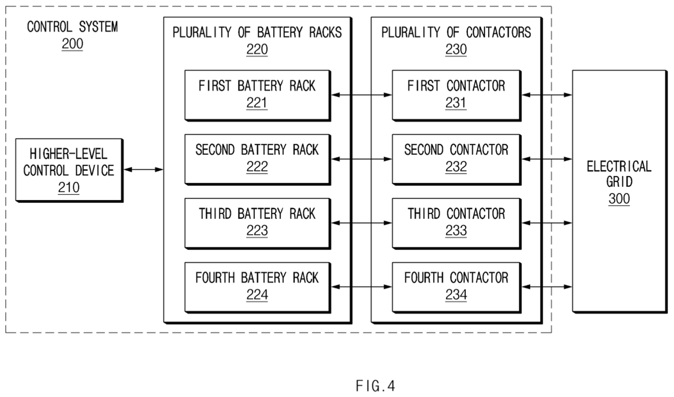

FIG. 4 illustrates a structure further including a plurality of contactors in a control system according to some embodiments.

Referring to FIG. 4, the control system 200 may further include a plurality of contactors 230. According to an embodiment, the plurality of contactors 230 may be configured to respectively contact the plurality of battery racks 220 for energy exchange with the electrical grid 300.

The plurality of contactors 230 may be respectively connected to the plurality of battery racks 220. The first contactor 231 may be connected to the first battery rack 221, the second contactor 232 may be connected to the second battery rack 222, and the other contactors may also be connected to corresponding battery racks.

The higher level control device 210 may control opening/closing of the plurality of contactors 230. For example, when the first battery rack 221 is connected to the electrical grid 300, the higher level control device 210 may control the first contactor 231 to connect the first battery rack 221 to the electrical grid 300. According to an embodiment, when an error occurs in any one of the plurality of battery racks 220 and the electrical grid 300, the higher level control device 210 may separate the plurality of contactors 230 to electrically protect the other one.

According to an embodiment, the higher level control device 210 may be configured to perform a state diagnosis function on the plurality of battery racks 220 based on the battery data and generate a contactor separation command for separating at least some of the plurality of contactors 230 from the plurality of battery racks 220 based on a result of performing the state diagnosis function. For example, when it is determined based on the battery data that an error of a voltage behavior occurs in the second battery rack 222, the higher level control device 210 may provide the control command for separating the second contactor 232 to the intermediate management device of the second battery rack 222.

According to an embodiment, each of the plurality of battery racks 220 may further include a circuit breaker, and the higher level control device 210 may be configured to generate an open command for opening a circuit breaker of a battery rack corresponding to the at least some contactor separated from the plurality of battery racks 220, together with the contactor separation command. For example, when generating the contactor separation command for separating the second contactor 232, the higher level control device 210 may also generate the open command for opening the circuit breaker of the second battery rack 222 and provide the contactor separation command and the open command to the intermediate management device.

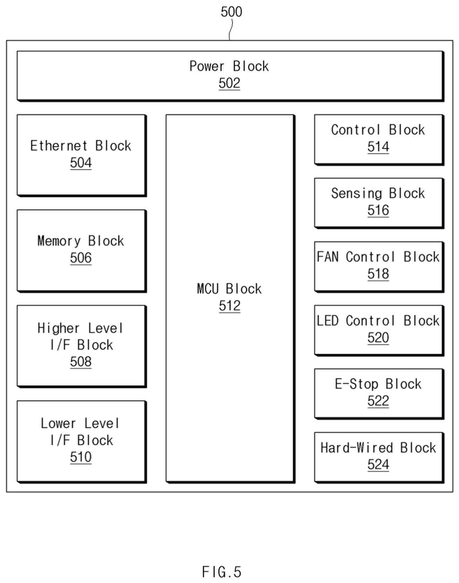

FIG. 5 illustrates a conventional intermediate management deviceincluding a self-calculation processing function.

Referring to FIG. 5, a conventional intermediate management device 500 including a self-calculation processing function is shown. The conventional intermediate management device 500 may include various function blocks, especially an MCU block 512 regarding a calculation processing function.

The conventional intermediate management device 500 may include not only the MCU block 512, but also a power block 502, an Ethernet block 504, a memory block 506, a higher level interface block 508, a lower level interface block 510, a control block 514, a sensing block 516, a fan control block 518, an LED control block 520, an emergent stop block 522, and a hard-wired block 524.

When the conventional intermediate management device 500 includes the MCU block 512, excessively many MCUs may be present on the control system of the power grid ESS, and a cost for maintaining and managing them may increase. In particular, when software/firmware update of an FOTA type is provided, a high cost may be required for many MCUs to have hardware supporting the FOTA type.

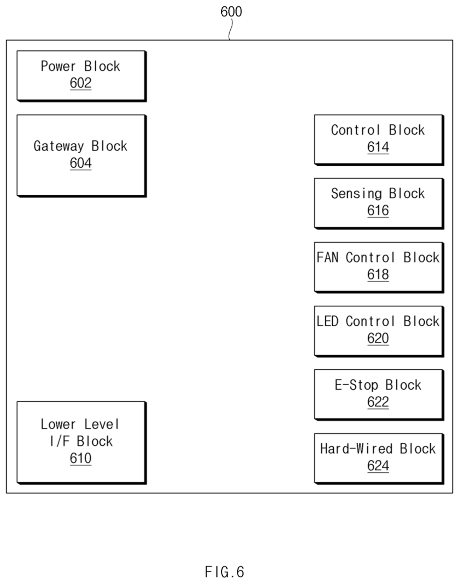

FIG. 6 illustrates an intermediate management device not including a calculation processing function, according to some embodiments.

Referring to FIG. 6, an intermediate management device 600 without a calculation processing function is shown. The intermediate management device 600 may perform a result of processing calculation of the higher level control device 210 without performing self-calculation processing.

When compared to the conventional intermediate management device 500, the intermediate management device 600 may not include either the MCU block 512 or the memory block 506 and the higher level interface block 508 related thereto. In the intermediate management device 600, the conventional Ethernet block 504 may be replaced with a gateway block 604. In particular, when compared to the conventional power block 502, a power block 602 of the intermediate management device 600 may be downsized significantly.

According to an embodiment, the intermediate management device 600 may include a gateway module (the gateway block 604) for interfacing with the higher level control device 210 and a plurality of function modules for performing a management function according to a control command. For example, the plurality of function modules may include a control block 614, a sensing block 616, a fan control block 618, an LED control block 620, an emergent stop block 622, and a hard-wired block 624. The plurality of function modules may merely perform a simple function such as on/off, etc., according to the control command of the higher level control device 210 instead of providing an active control function.

According to an embodiment, the intermediate management device 600 may further include a power module (the power block 602) simplified due to omission of the calculation processing function. When compared to the conventional power block 502, the power block (the power module) 602 may be downsized significantly due to omission of the MCU block 512. According to an embodiment, a capacity of the power module 602 may be less than 50 %, 30 %, 20 %, 10 %, or 5 % of the capacity of the conventional power block 502.

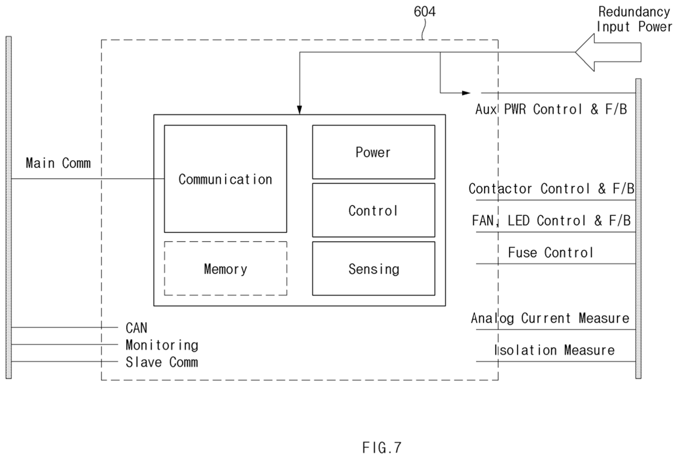

FIG. 7 illustrates a gateway block of an intermediate management device according to some embodiments.

Referring to FIG. 7, a structure and a function of the gateway block 604 of the intermediate management device 600 are shown. The gateway block 604 may be implemented in the form of a gateway IC.

The gateway IC may mainly have a communication function, and secondarily further include a memory function, a control function, a sensing function, etc. The memory function may be omitted. The gateway block 604 may operate based on externally supplied power. For example, excessively remaining power may be provided to the gateway IC due to omission of the MCU block 512, and may be fed back to outside of the gateway IC when additional power remains.

The gateway IC may include main communication and slave communication, and the main communication may be performed by a communication module of the gateway IC. In addition, CAN communication and a communication monitoring function may be provided. In association with the control function and the sensing function, a control signal and a feedback signal such as a contactor, a fan, an LED, a fuse, etc., may be transmitted to the intermediate management device 600 through the gateway IC, and a signal related to current measurement, etc., may be transmitted to the intermediate management device 600.

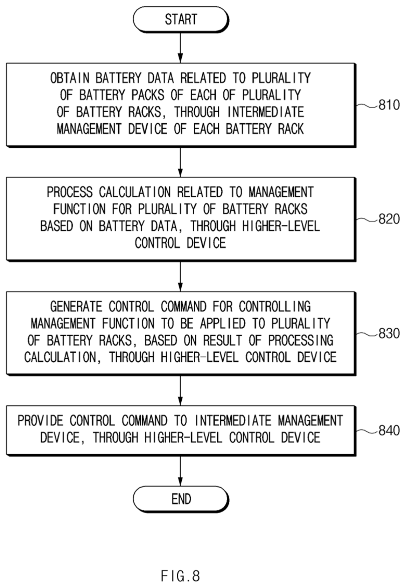

FIG. 8 illustrates operations of a control method according to some embodiments.

Referring to FIG. 8, a control method 800 may include operations 810 to 840. However, without being limited thereto, some operations may be omitted and other general-purpose operations may be added, and operations of the control method 800 may be executed in an order different from that shown.

The control method 800 may include operations processed in time series by the control system 200. Therefore, matters described for the control system 200 above, even omitted below, may be equally applied to the control method 800.

Operations 810 to 840 of the control method 800 may be performed by the higher level control device 210 and the plurality of battery racks 220 of the control system 200.

In operation 810, the control system 200 may obtain battery data related to a plurality of battery packs of each of a plurality of battery racks through an intermediate management device of each battery rack.

In operation 820, the control system 200 may process calculation related to a management function for the plurality of battery racks based on the battery data, through a higher level control device.

In operation 830, the control system 200 may generate a control command for controlling a management function to be applied to the plurality of battery racks based on a result of processing calculation, through the higher level control device.

In operation 840, the control system 200 may provide the control command to the intermediate management device, through the higher level control device.

According to an embodiment, the control method 800 may be implemented in the form of a computer program stored in a computer-readable storage medium. That is, the computer program may include instructions for implementing the control method 800, and the instructions of the program may be stored in a computer-readable storage medium. The computer programs may include mobile applications.

According to an embodiment, the computer-readable storage medium may include magnetic media such as hard disk, floppy disk, and magnetic tape, optical media such as compact disk read only memory (CD-ROM) and digital versatile disk (DVD), magnetooptical media such as floptical disk, and a hardware device especially configured to store and execute program instructions, such as read only memory (ROM), random access memory (RAM) and flash memory, etc. The computer program instructions may include a machine language code created by a complier and a high-level language code executable by a computer using an interpreter.

Terms such as "include", "constitute" or "have" described above may mean that the corresponding component may be inherent unless otherwise stated, and thus should be construed as further including other components rather than excluding other components. All terms including technical or scientific terms have the same meanings as those generally understood by those of ordinary skill in the art to which the embodiments disclosed herein pertain, unless defined otherwise. The terms used generally like terms defined in dictionaries should be interpreted as having meanings that are the same as the contextual meanings of the relevant technology and should not be interpreted as having ideal or excessively formal meanings unless they are clearly defined in the present document.

The above description is merely illustrative of the technical idea of the present disclosure, and various modifications and variations will be possible without departing from the essential characteristics of embodiments of the present disclosure by those of ordinary skill in the art to which the embodiments disclosed herein pertains. Therefore, the embodiments disclosed herein are intended for description rather than limitation of the technical spirit of the embodiments disclosed herein and the scope of the technical spirit of the present disclosure is not limited by these embodiments disclosed herein. The protection scope of the technical spirit disclosed herein should be interpreted by the following claims, and all technical spirits within the same range should be understood to be included in the range of the present disclosure.

### [Description of Symbols]

| | | | |
|---|---|---|---|
| 10: | Electrical Grid System | 100: | Remote Management Server |
| 200: | Control System | 300: | Electrical Grid |
| 210: | Higher level Control Device | 220: | Plurality of Battery Packs |
| 230: | Plurality of Contactors | 600: | Intermediate Management Device |
| 604: | Gateway Module | 800: | Control Method |

## Claims

1. A control system comprising:
a plurality of battery racks, each comprising a plurality of battery packs and an intermediate management device configured to obtain battery data related to the plurality of battery packs; and
a higher level control device configured to process calculation related to a management function for the plurality of battery racks, based on the battery data, generate a control command for controlling the management function to be applied to the plurality of battery racks, based on a result of processing calculation, and provide the control command to the intermediate management device.

2. The control system of claim 1, wherein the intermediate management device comprises a gateway module for interfacing with the higher level control device and a plurality of function modules for executing the management function according to the control command.

3. The control system of claim 1, wherein each of the plurality of battery packs comprises a plurality of battery modules and a lower level management device, and
the lower level management device is configured to perform the management function on the plurality of battery modules according to the control command transmitted from the intermediate management device.

4. The control system of claim 1, further comprising a plurality of contactors configured to respectively contact the plurality of battery racks for energy exchange with an electrical grid.

5. The control system of claim 4, wherein the higher level control device is further configured to:
perform a state diagnosis function on the plurality of battery racks based on the battery data; and
generate a contactor separation command for separating at least some of the plurality of contactors from the plurality of battery racks based on a result of performing the state diagnosis function.

6. The control system of claim 5, wherein each of the plurality of battery racks further comprises a circuit breaker, and
the higher level control device is further configured to generate an open command for opening a circuit breaker of a battery rack corresponding to the at least some contactor separated from the plurality of battery racks, together with the contactor separation command.

7. The control system of claim 1, wherein the higher level control device is further configured to update battery management software that provides the function management in a firmware over the air (FOTA) manner through a remote management server.

8. A control method comprising:
obtaining battery data related to a plurality of battery packs of each of a plurality of battery racks, through an intermediate management device of each battery rack;
processing calculation related to a management function for the plurality of battery racks based on the battery data, through a higher level control device;
generating a control command for controlling the management function to be applied to the plurality of battery racks based on a result of processing calculation, through the higher level control device; and
providing the control command to the intermediate management device, through the higher level control device.

9. The control method of claim 8, wherein the intermediate management device comprises a gateway module for interfacing with the higher level control device and a plurality of function modules for executing the management function according to the control command.

10. The control method of claim 8, further comprising performing the management function on a plurality of battery modules of each battery pack according to the control command transmitted from the intermediate management device, through a lower level management device of each battery pack.

11. The control method of claim 8, further comprising respectively contacting the plurality of battery racks for energy exchange with an electrical grid, through a plurality of contactors.

12. The control method of claim 11, further comprising:
performing a state diagnosis function on the plurality of battery racks based on the battery data, through the higher level control device; and
generating a contactor separation command for separating at least some of the plurality of contactors from the plurality of battery racks based on a result of performing the state diagnosis function, through the higher level control device.

13. The control method of claim 12, wherein each of the plurality of battery racks further comprises a circuit breaker, and
the generating of the contactor separation command comprises generating an open command for opening a circuit breaker of a battery rack corresponding to the at least some contactor separated from the plurality of battery racks, together with the contactor separation command.

14. The control method of claim 8, further comprising updating, through the higher level control device, battery management software that provides the function management in a firmware over the air (FOTA) manner through a remote management server.
